# EUROPEAN PATENT SPECIFICATION

(11) **EP 2 749 831 B1**
(45) Date of publication and mention of the grant of the patent: **17.04.2019**
(21) Application number: 13199104.4
(22) Date of filing: 20.12.2013
(51) Int. Cl.: F28D 20/00, F28F 3/08

(54) **Chemical heat storage reactor and chemical heat storage system**
Chemischer Wärmespeicherreaktor und chemische Wärmespeicheranlage
Réacteur de stockage de chaleur chimique et système de stockage de chaleur chimique

(30) Priority: 26.12.2012 JP 2012283467
(43) Date of publication of application: 02.07.2014
(73) Proprietor: Kabushiki Kaisha Toyota Chuo Kenkyusho, Nagakute-shi, Aichi 480-1192 (JP)
(72) Inventor: Shimazu, Takashi, Nagakute-shi, Aichi 480-1192 (JP); Mochizuki, Miyo, Nagakute-shi, Aichi 480-1192 (JP)
(74) Representative: Kramer Barske Schmidtchen Patentanwälte PartG mbB

(56) References cited:
- WO-A1-2012/133258
- WO-A1-2012/133600
- JP-A- 2010 181 051

## Description

### BACKGROUND

### Technical Field

The present invention relates to a chemical heat storage reactor and a chemical heat storage system that store heat by a chemical reaction.

### Related Art

Japanese Patent Application Laid-Open (JP-A) No. 2012-211713 describes a configuration having stacked layers of a chemical heat storage reactor and a heating medium flow path. Heat storage material molded components are arranged inside a vessel of the chemical heat storage reactor so as to be in contact with a wall of the vessel.

The heat storage material molded component repeatedly expands and contracts as a result of expansion due to a hydration reaction during heat generation, and contraction due to a dehydration reaction during heat storage.

Expansion force from the heat storage material molded component repeatedly acts on the vessel due to the repeated expansion and contraction of the heat storage material molded component. The vessel is formed by welding together thin plate materials so as to reduce the amount of heat storage by the vessel itself.

Therefore, cracks could conceivably be formed for example at the welded portions of the vessel due to the expansion force from the heat storage material molded component acting on the vessel. Increasing the thickness of the plate material might be considered in order to prevent such cracking; however, this would increase the amount of heat storage by the vessel itself.

WO 2012/133600 A1 relates to a reaction vessel, comprising a chemical heat storage material for generating water vapour by reaction heat that is generated when the chemical heat storage material reacts with water, and storing heat by heating to separate water from the chemical heat storage material, and a heat exchanger that internally houses the chemical heat storage material, wherein the heat exchanger comprises a heat storage material housing space in which the chemical heat storage material is housed, a water flow path comprised with a plurality of ejection outlets in communication with the heat storage material housing space, a main tube connected to an external water supply section, and a branch tube in communication with the main tube and the plurality of ejection outlets, and a heating medium flow path through which a heating medium is caused to flow for heating the chemical heat storage material.

JP 2010-181051 A relates to a chemical heat storage reactor including a chemical heat storage material composite compact including a powder chemical heat storage material absorbing heat in accompany with a dehydrating reaction and radiating heat in accompany with a hydrating reaction, and sepiolite mixed with the powder chemical heat storage material, a heat exchanger body having a heat storage material receiving part in which the chemical heat storage material composite compact is disposed and further a vapor flow channel for circulating the vapor is formed, and a filter part disposed on a part facing the vapor flow channel of the chemical heat storage material composite compact, and having a part of a hole diameter smaller than a particle size of the powder chemical heat storage material and permitting the circulation of the vapor at least at a part in the thickness direction. WO 2012/133258 relates to a heat storage reactor including a heat storage material reaction portion, a heat exchange portion and a vessel sealing the heat storage material portion and the heat exchange portion, the heat storage material portion comprising a heat storage material layer, a reaction dispersion layer and a heat storage material restriction layer.

### SUMMARY

An object of the present invention is to prevent expansion force of a heat storage material molded component from acting directly on a vessel configuring a chemical heat storage reactor.

An aspect of the invention is a chemical heat storage reactor as claimed in claim 1.

According to the configuration of claim 1, the heat storage material reaction portion and the heat exchange portion are sealed inside the vessel. The reaction medium flow section in which the reaction medium that reacts with the heat storage material molded component flows is formed between the heat storage material reaction portion and the vessel.

Expansion force of the heat storage material molded component that arises due to a chemical reaction with the reaction medium can accordingly be prevented from acting directly on the vessel.

Furthermore, the heat storage material layer, the heat storage material restraining layer, and the reaction medium dispersion layer that configure the heat storage material reaction portion are superimposed on one another in a non-joined state. Accordingly, the respective layers can be managed independently of one another.

In addition, the reaction medium in the reaction medium flow section is capable of flowing out from, or flowing into, at least one edge face of the edge faces at the four directions of the reaction medium dispersion layer. An increase in length of the water vapor dispersion distance (the length of a water vapor flow path) can accordingly be prevented in comparison to when the reaction medium flows out from, or flows into, only one edge face.

The heat source and the heat use object disposed to the exterior of the vessel are communicated with the heat exchange portion by the heating medium path that extends from the heat exchange portion and penetrates a wall of the vessel to reach the exterior of the vessel. The heat source and the heat use object are thus coupled to the heating medium path at the exterior of the vessel.

Therefore, communication between the heat source and the heat exchange portion during heat storage, and communication between the heat use object and the heat exchange portion during heat generation (heat release) can be efficiently implemented.

The chemical heat storage reactor may further include plural reaction units, each including the heat exchange portion and the heat storage material reaction portion, wherein the plural reaction units are superimposed on one another inside the vessel.

According to the above configuration, plural reaction units that are respectively configured by the heat exchange portion and the heat storage material reaction portion are superimposed on one another inside the vessel. Therefore, the number of reaction units can be easily increased or decreased, whereby the heat storage ability can be easily increased or decreased.

The respective heat exchange portions of the plural reaction units may communicate with each other through coupling flow paths.

The coupling flow paths may be formed by tubes that are capable of resilient deformation.

Another aspect of the invention is a chemical heat storage system as claimed in claim 5.

According to the configuration of claim 5, the chemical heat storage system is provided with the chemical heat storage reactor of any of the preceding claims. Therefore, expansion force of the heat storage material molded component arising due to a chemical reaction with the reaction medium can be prevented from acting directly on the vessel. Accordingly, the durability of the chemical heat storage system can be increased.

According to the above aspects, expansion force of the heat storage material reaction portion can be prevented from acting directly on the vessel configuring the chemical heat storage reactor.

### BRIEF DESCRIPTION OF THE DRAWINGS

Exemplary embodiments of the present invention will be described in detail based on the following figures, wherein:
Fig. 1 is a perspective view illustrating a reactor (chemical heat storage reactor) according to a first exemplary embodiment;
Fig. 2 is an exploded perspective view illustrating the reactor (chemical heat storage reactor) according to the first exemplary embodiment;
Fig. 3 is an exploded perspective view illustrating the reactor (chemical heat storage reactor) according to the first exemplary embodiment;
Fig. 4 is an exploded perspective view illustrating the inside of a reaction vessel of the reactor (chemical heat storage reactor) according to the first exemplary embodiment;
Fig. 5A and Fig. 5B are perspective views illustrating members including end plates, heat flow portions, and a heat storage material reaction portion of the reactor (chemical heat storage reactor) according to the first exemplary embodiment;
Fig. 6A and Fig. 6B are an exploded perspective view and a perspective view illustrating a heat storage material layer of the heat storage material reaction portion of the reactor (chemical heat storage reactor) according to the first exemplary embodiment;
Fig. 7A and Fig. 7B are respectively an exploded perspective view illustrating a reaction medium dispersion layer of the heat storage material reaction portion of the reactor (chemical heat storage reactor) according to the first exemplary embodiment, and a perspective view illustrating members configuring the reaction medium dispersion layer.
Fig. 8A and Fig. 8B are a perspective view and a plan view illustrating the reaction medium dispersion layer of the heat storage material reaction portion of the reactor (chemical heat storage reactor) according to the first exemplary embodiment;
Fig. 9 is a plan view illustrating a heat flow portion of the reactor (chemical heat storage reactor) according to the first exemplary embodiment;
Fig. 10 is a cross-section illustrating the heat storage material reaction portion of the reactor (chemical heat storage reactor) according to the first exemplary embodiment;
Fig. 11 is a plan view illustrating the reactor (chemical heat storage reactor) according to the first exemplary embodiment;
Fig. 12A and Fig. 12B are schematic configuration diagrams illustrating a chemical heat storage system according to the first exemplary embodiment;
Fig. 13 is a chart illustrating reaction equilibrium lines of heat storage material molded components employed in the reactor (chemical heat storage reactor) according to the first exemplary embodiment, and gas-liquid equilibrium lines of water, that are shown as a relationship between temperature and equilibrium pressure;
Fig. 14 is a disassembled perspective view illustrating the inside of a reaction vessel of a reactor (chemical heat storage reactor) according to a second exemplary embodiment;
Fig. 15 is a disassembled perspective view illustrating the inside of a reaction vessel of a reactor (chemical heat storage reactor) according to a third exemplary embodiment; and
Fig. 16A and Fig. 16B are plan views illustrating modified examples of a reactor (chemical heat storage reactor) according to each of the exemplary embodiments.

### DETAILED DESCRIPTION

### First Exemplary Embodiment

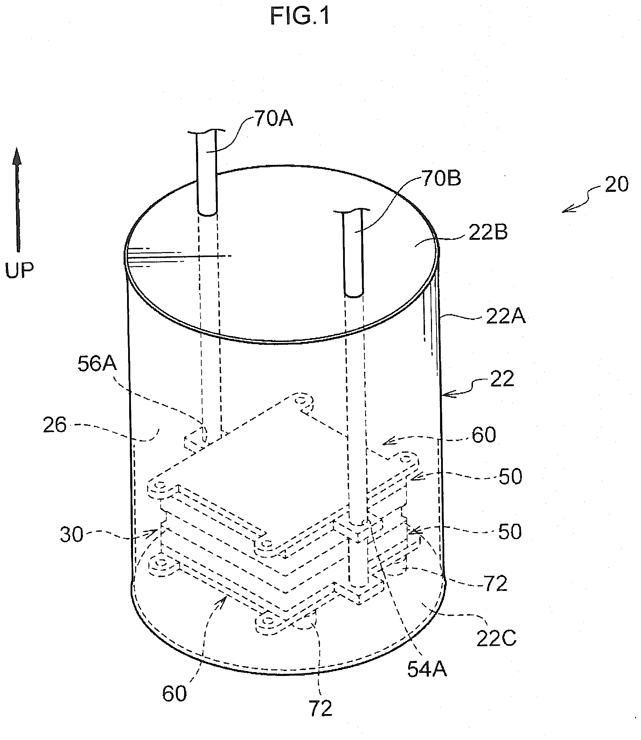

Explanation follows regarding an example of a chemical heat storage reactor and a chemical heat storage system according to a first exemplary embodiment of the present invention, with reference to Fig. 1 to Fig. 13. Note that in the drawings, the arrow UP indicates upwards in the vertical direction.

### Overall Configuration

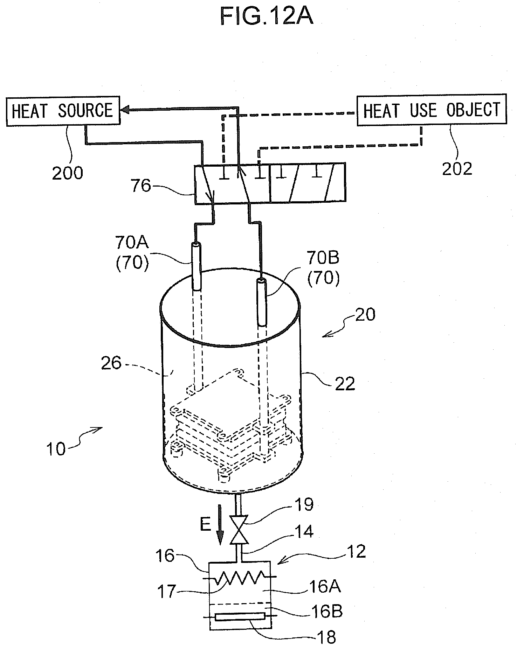

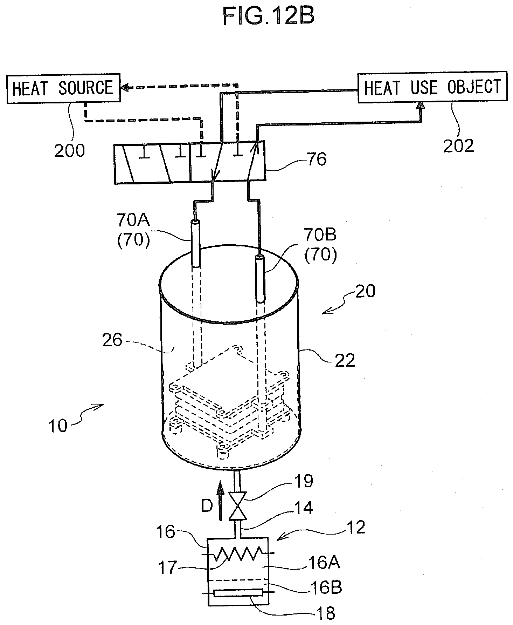

As illustrated in Fig. 12A and Fig. 12B, a chemical heat storage system 10 according to the first exemplary embodiment includes an evaporator/condenser 12 that serves as an example of a medium vessel in which evaporation of water and condensation of water vapor (an example of a reaction medium) are performed, a reactor 20 that serves as an example of a chemical heat storage reactor, and a communication path 14 that connects the inside of the evaporator/condenser 12 and the inside of the reactor 20 in communication with each other.

### Evaporator/Condenser

The evaporator/condenser 12 includes functions of an evaporation section for evaporating stored water and supplying the evaporated water to the reactor 20 (to generate water vapor), of a condensation section for condensing water vapor received from the reactor 20, and of a storage section for storing water from the condensed water vapor.

The evaporator/condenser 12 further includes a vessel 16 in which water is stored. A coolant flow path 17 used for water vapor condensation, and a heater 18 used for water evaporation, are provided in the vessel 16.

The coolant flow path 17 is disposed so as to perform heat exchange with a portion inside the vessel 16 that at least includes a gas phase 16A. The heater 18 is disposed so as to perform heating by passing electricity at a portion inside the vessel 16 that at least includes a liquid phase (storage portion) 16B.

### Communication Path

The communication path 14 includes an opening and closing valve 19 that switches between communication and non-communication of the evaporator/condenser 12 (vessel 16) and the reactor 20 (reaction vessel 22, described later). Connection locations between the vessel 16, the reaction vessel 22, the communication path 14, and the opening and closing valve 19 are configured airtight, and gas is removed in advance to form a vacuum in the internal space thereof.

### Reactor

As illustrated in Fig. 1, the reactor 20 includes the reaction vessel 22 that serves as an example of a vessel, a heat storage material reaction portion 30 that is disposed inside the reaction vessel 22 and that generates heat, or stores heat, and heat flow portions 50 that serve as an example of a heat exchange portion through which a heating medium flows.

### Reaction Vessel

The reaction vessel 22 is formed from stainless steel plates or the like, and includes a circular cylinder shaped main body 22A that extends along the vertical direction, a circular plate shaped upper lid 22B that closes off an upper end of the main body 22A, and a circular plate shaped lower lid 22C that closes off a lower end of the main body 22A. The main body 22A and the upper lid 22B, and also the main body 22A and the lower lid 22C, are respectively welded together, thereby sealing between the main body 22A and the upper lid 22B, and between the main body 22A and the lower lid 22C.

The inside of the reaction vessel 22 is thus isolated from the outside of the reaction vessel 22, and gas is removed from inside the reaction vessel 22 to form a vacuum. The inside of the reaction vessel 22 configures a reaction medium flow section 26 in which water vapor (an example of a reaction medium) flows.

### Heat Storage Material Reaction Portion: Overall Configuration

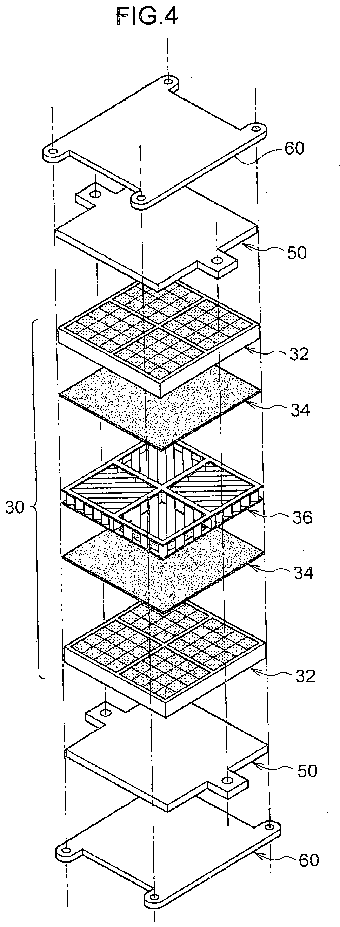

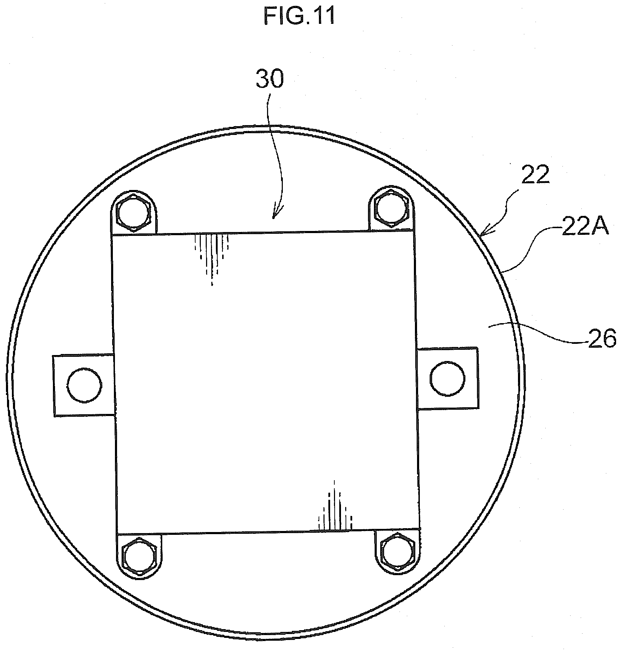

The heat storage material reaction portion 30 is sealed inside the reaction vessel 22 so as to be surrounded by the reaction medium flow section 26 (see Fig. 11). As illustrated in Fig. 4, the heat storage material reaction portion 30 includes a pair of heat storage material layers 32, a pair of heat storage material restraining layers 34 that are disposed between the pair of heat storage material layers 32, and a reaction medium dispersion layer 36 disposed between the pair of heat storage material restraining layers 34.

The heat storage material layers 32, the heat storage material restraining layers 34 and the reaction medium dispersion layer 36 are respectively configured with similar rectangular shapes as viewed along the vertical direction, and are superimposed on one another along the vertical direction (i.e., in a stacked layer structure), in a non-joined-together state (in a state without being fixed by welding or the like).

### Heat Storage Material Reaction Portion: Heat Storage Material Layers

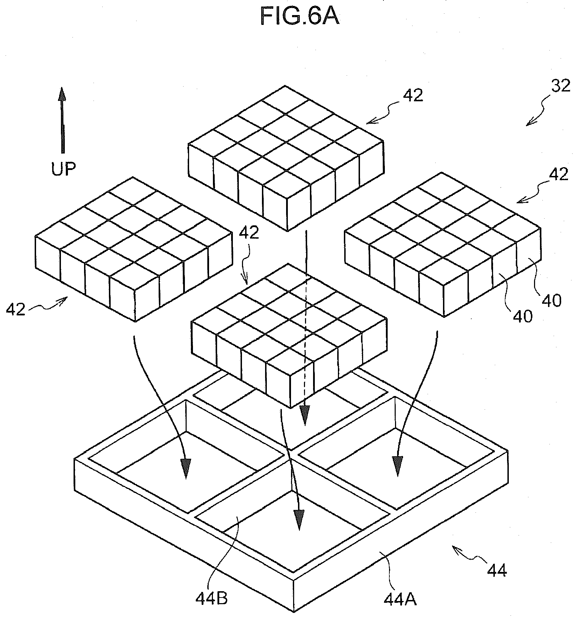

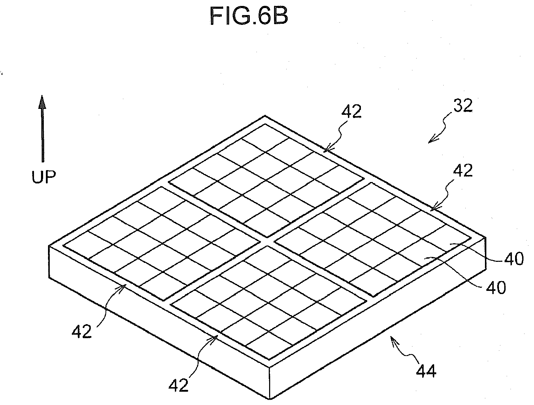

As illustrated in Fig. 6A and Fig. 6B, the heat storage material layers 32 include heat storage material units 42 respectively configured from plural (16 in the present exemplary embodiment) heat storage material molded components 40, and a frame member 44 to which the heat storage material units 42 are attached.

The heat storage material molded components 40 each have a thickness of 30 mm, with each of the heat storage material molded components 40 configured in a square shape with sides of 100 mm as viewed along the vertical direction (the plate thickness direction). Note that the thickness of the heat storage material molded components 40 is exaggerated in the drawings.

For example, molded components of calcium oxide (CaO: an example of a heat storage material) that is one example of an alkali earth metal oxide are used as the heat storage material molded components 40. The molded components are formed in substantially rectangular block shapes by for example kneading together and firing a calcium oxide powder and a binder (for example clay mineral).

The heat storage material molded components 40 release heat (generate heat) accompanying hydration, and store heat (absorb heat) accompanying dehydration. The heat storage material molded components 40 are capable of reversibly repeating heat release and heat storage by the reaction shown below.

CaO + H₂O ↔ Ca (OH)₂

Combining a heat storage amount and heat generation amount Q with the above formula gives:

CaO + H₂O → Ca (OH)₂ + Q

Ca (OH)₂ + Q ← CaO + H₂O

For example, the heat storage capacity per 1kg of the heat storage material molded components 40 is 1.86 MJ/kg.

In the present exemplary embodiment, in a case in which the heat storage material is configured by a powder, the average particle diameter of the powder is taken as the particle diameter of the heat storage material configuring the heat storage material molded components 40, and in a case in which the heat storage material is in granular form, the average particle diameter of the powder prior to granulation is taken as the particle diameter of the powdered heat storage material configuring the heat storage material molded components 40. This is because it is assumed that were the particles to disintegrate, they would return to the state of the previous process.

The heat storage material units 42 that are each configured from 16 of the heat storage material molded components 40 are formed in square shapes with sides of 400 mm as viewed along the vertical direction (the plate thickness direction). Each of the heat storage material layers 32 is provided with four heat storage material units 42.

Each of the frame members 44 to which four heat storage material units 42 are attached includes an outer frame 44A that is configured in a rectangular frame shape as viewed along the vertical direction, and a cross shaped partitioning frame 44B that partitions the space in which adjacent heat storage material units 42 are disposed. Accordingly, movement in horizontal direction (a direction orthogonal to the plate thickness direction) of the heat storage material units 42 is restrained by the outer frame 44A and the partitioning frame 44B.

A vertical direction dimension (thickness dimension) of the outer frame 44A and the partitioning frame 44B is determined such that the density of the heat storage material molded components 40 when expanded accompanying a hydration reaction reaches a predetermined set density of the heat storage material molded components 40.

### Heat Storage Material Reaction Portion: Heat Storage Material Layers

As illustrated in Fig. 4, the heat storage material restraining layers 34 are interposed between the reaction medium dispersion layer 36 and the heat storage material layers 32, and are configured by etching filters formed with multiple through holes of *φ*200 *µ*m.

The heat storage material restraining layers 34 have a filter rating that is smaller than the average particle diameter of the heat storage material configuring the heat storage material molded components 40 (see Fig. 6A and Fig. 6B). The heat storage material restraining layers 34 therefore permit water vapor to pass through flow paths that are smaller than the average particle diameter of the heat storage material configuring the heat storage material molded components 40, and restrict passage of the heat storage material that is larger than the average particle diameter.

Note that filter rating refers to particle diameters that give filtration efficiencies of 50% to 98%. Filtration efficiency is the removal efficiency with respect to particles of a given particle diameter.

### Heat Storage Material Reaction Portion: Reaction Medium Dispersion Layer

As illustrated in Fig. 4, the reaction medium dispersion layer 36 is interposed between the pair of heat storage material restraining layers 34, and is in communication with the reaction medium flow section 26 (see Fig. 1). Water vapor supplied to the heat storage material layers 32 or water vapor discharged from the heat storage material layers 32 can flow through the reaction medium dispersion layer 36.

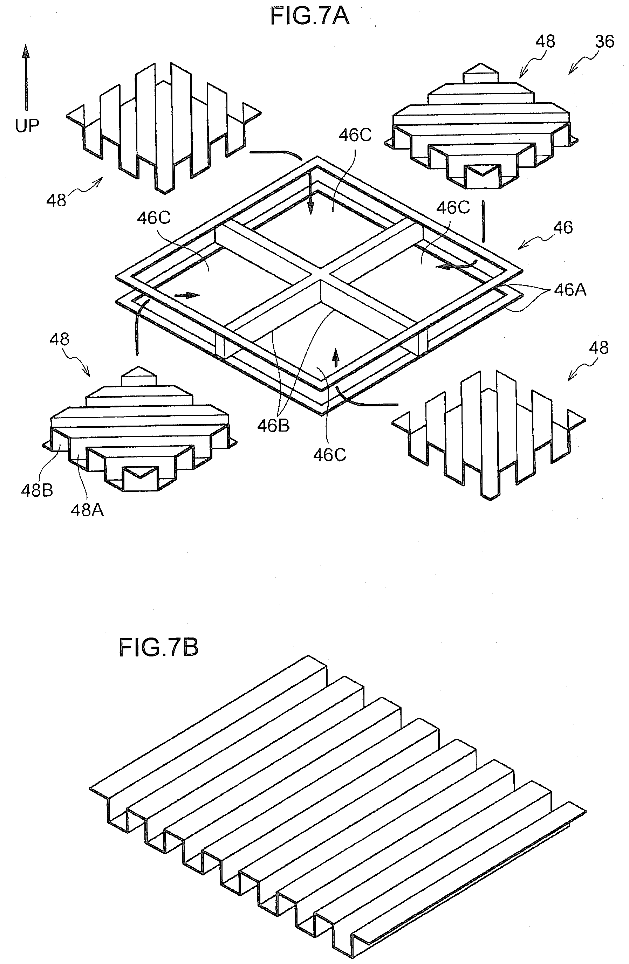

As illustrated in Fig. 7A, the reaction medium dispersion layer 36 includes a frame member 46 and four flow path members 48 that are attached to the frame member 46 and that are rectangular shaped as viewed along the vertical direction.

The frame member 46 includes a pair of outer frames 46A that are configured in rectangular frame shapes as viewed along the vertical direction and are separated from each other in the vertical direction, and a cross shaped partitioning frame 46B that partitions between adjacent flow path members 48. The partitioning frame 46B is configured with a rectangular shaped cross-section profile, and the pair of outer frames 46A are respectively fixed to upper faces and lower faces of end portions of the partitioning frame 46B that is configured with a cross shaped cross-section profile. Rectangular shaped attachment spaces 46C to which the four flow path members 48 are attached are thereby formed.

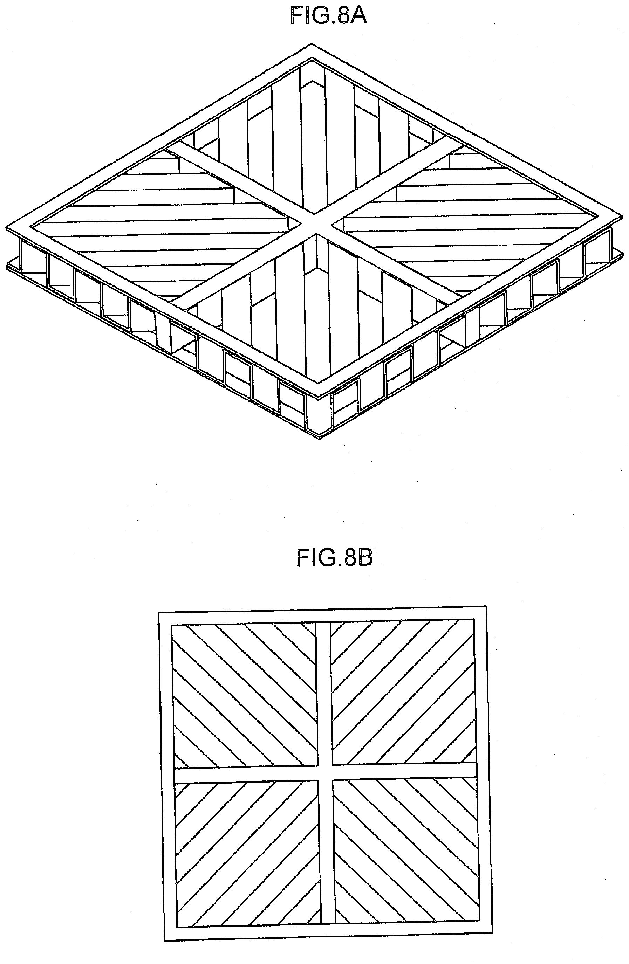

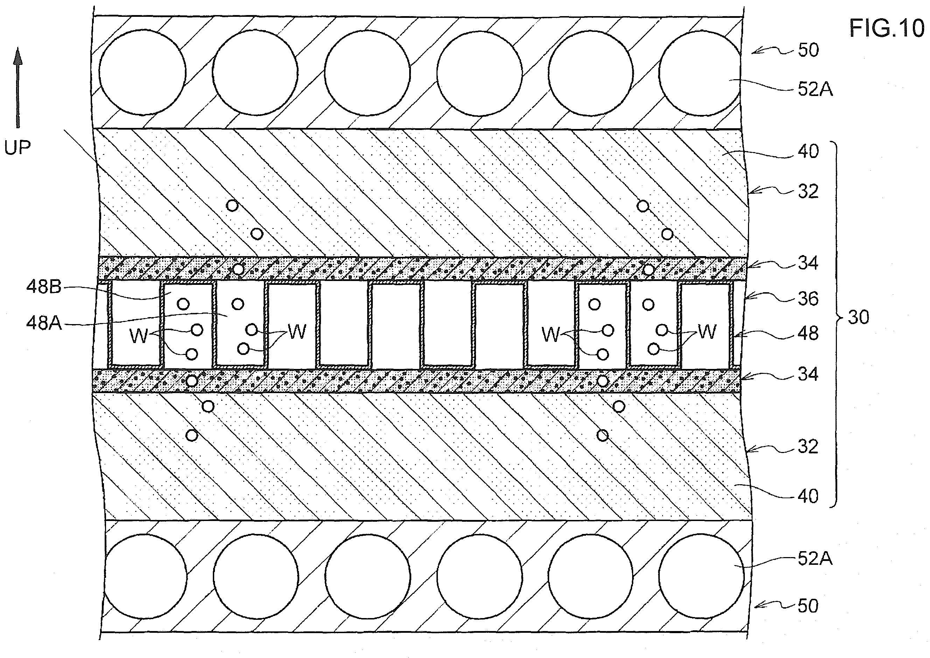

The flow path members 48 are formed from corrugated plates (see Fig. 7B) having a repeating undulated rectangular wave shaped cross-section. The flow path directions, which are running directions of undulating portions, extend along diagonal lines of the frame member 46 as viewed along the vertical direction (see Fig. 8B). Flow paths of the flow path members 48 are open toward edge portions of the frame member 46. Upper flow paths 48A that release water vapor flowing along the flow path direction upwards, and lower flow paths 48B that release water vapor downwards are thereby formed (see Fig. 10).

As illustrated in Fig. 8A and Fig. 8B, the reaction medium dispersion layer 36 allows water vapor in the reaction medium flow section 26 to flow out from and flow into edge faces in four directions of the reaction medium dispersion layer 36.

It should be appreciated that the configuration of the reaction medium dispersion layer 36 is not limited to that illustrated in Figs. 7A and 8, as long as water vapor can be supplied to the heat storage material layers 32 and can be discharged from the heat storage material layers 32. As a modification, for example, the reaction medium dispersion layer 36 may be formed only by one flow path member 48 as illustrated in Fig. 7, which has a surface area substantially corresponding to that of the heat storage material layer 32, instead of being formed by four flow path members 48 and the frame member 46 as illustrated in Fig. 7A. Also in this modified configuration, the reaction medium is capable of flowing out from, or flowing into, at least one edge face of the edge faces at the four directions of the reaction medium dispersion layer 36.

### Heat Flow Portion

As illustrated in Fig. 4, a pair of heat flow portions 50 are provided so as to sandwich the heat storage material reaction portion 30 therebetween, from above and below. In other words, the heat flow portions 50 are superimposed with the heat storage material reaction portion 30 and are disposed adjacent to the heat storage material reaction portion 30.

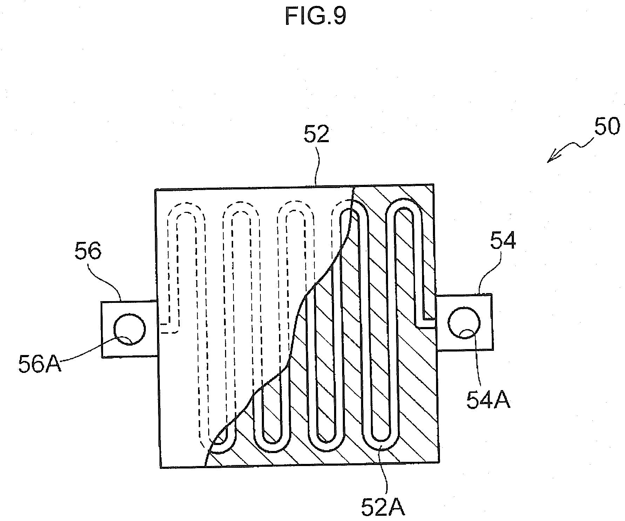

As illustrated in Fig. 9, each of the heat flow portions 50 includes a main body 52 that is rectangular shaped as viewed along the vertical direction, and a pair of projection portions 54, 56 that project out from the main body 52 such that the leading end sides of the projection portions 54, 56 head away from each other as viewed along the vertical direction.

The pair of projection portions 54, 56 are respectively formed with through holes 54A, 56A that penetrate the projection portions 54, 56 along the vertical direction. A wave shaped flow path 52A in which the heating medium flows is formed inside the main body 52. One end of the flow path 52A opens at a peripheral face of the through hole 54A, and the other end of the flow path 52A opens at a peripheral face of the through hole 56A. The flow path 52A communicates with a heat source 200 and a heat use object 202 (see Fig. 12A and Fig. 12B) that are disposed to the exterior of the reaction vessel 22 through heating medium flow paths 70 that serve as examples of a heating medium flow path, which is described later.

A pair of end plates 60 are respectively provided so as to sandwich the pair of heat flow portions 50 along the vertical direction, as illustrated in Fig. 4.

### End Plates

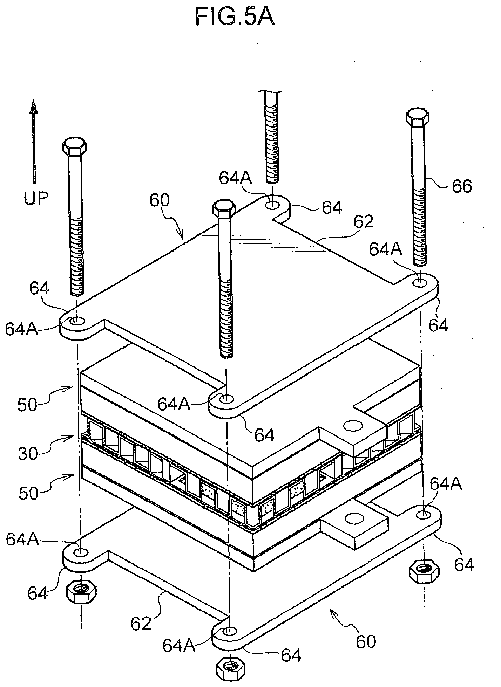

As illustrated in Fig. 5A, the end plates 60 each include a main body 62 that is rectangular shaped as viewed along the vertical direction, and four projection portions 64 projecting out from the four corners of the main body 62. A through hole 64A is formed penetrating each of the projection portions 64 along the vertical direction.

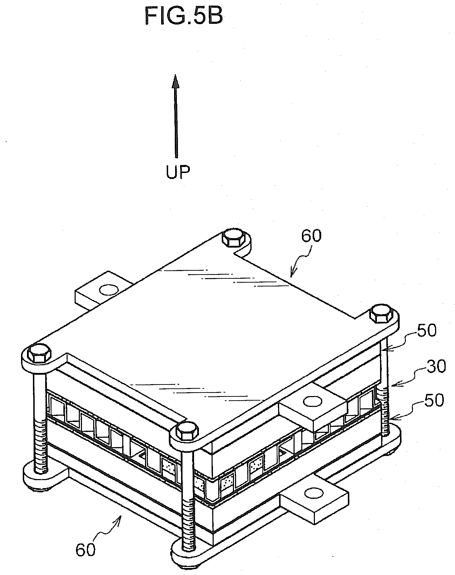

As illustrated in Fig. 5A and Fig. 5B, in a state in which the heat storage material reaction portion 30 is interposed between the pair of heat flow portions 50, the pair of heat flow portions 50 are further interposed between the pair of end plates 60.

In this state, bolts 66 are passed through the respective through holes 64A formed in the projection portions 64 of the upper end plate 60, and leading end sides of each of the bolts 66 are then passed through the respective through holes 64A formed in the projection portions 64 of the lower end plate 60. Nuts are then fastened onto the leading end portions of the bolts 66, thus giving a restraining force along the vertical direction that acts on the pair of heat flow portions 50 interposed between the pair of end plates 60 and on the heat storage material reaction portion 30.

### Heating Medium Flow Path

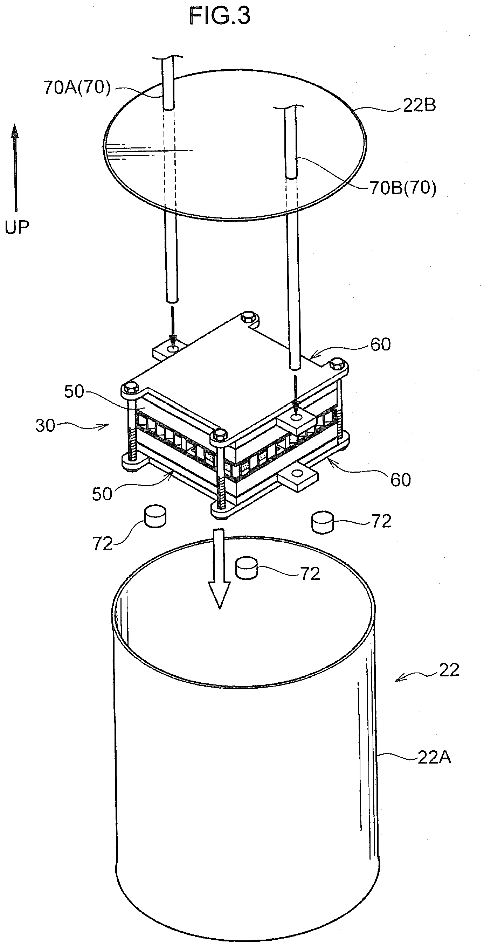

As illustrated in Fig. 3, two heating medium flow paths 70 are configured in pipe shapes, extending in the vertical direction so as to penetrate the upper lid 22B configuring the reaction vessel 22. One heating medium flow path 70A is used to allow the heating medium to flow inside the reaction vessel 22 from the exterior of the reaction vessel 22, and the other heating medium flow path 70B is used to allow the heating medium to flow out from inside the reaction vessel 22 to the exterior of the reaction vessel 22.

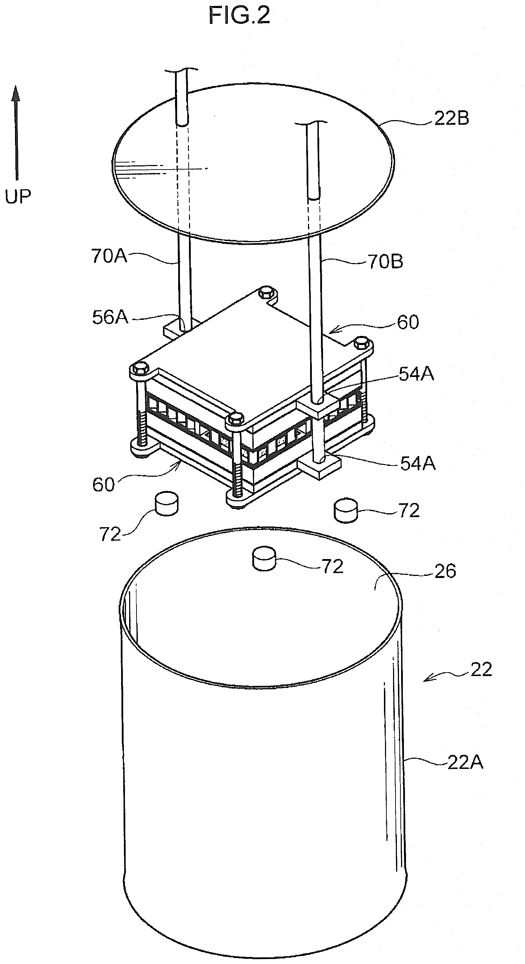

A through hole (not illustrated in the drawings) is formed in a peripheral face of the heating medium flow path 70A, and as illustrated in Fig. 2, the heating medium flow path 70A is inserted through the through holes 56A formed in the pair of heat flow portions 50. Similarly, a through hole (not illustrated in the drawings) is formed in a peripheral face of the heating medium flow path 70B, and the heating medium flow path 70B is inserted through the through holes 54A formed in the pair of heat flow portions 50. The heating medium flow paths 70 and the flow paths 52A (see Fig. 9) formed in the heat flow portions 50 are thereby communicated with each other. As a result of adopting such a configuration, the heating medium flowing in the heat flow portions 50 form parallel flows.

### Other Members

As illustrated in Fig. 1 and Fig. 2, four circular column shaped support members 72 (of which two are illustrated in Fig. 1, and of which three are illustrated in Fig. 2) are provided to support from below the heat storage material reaction portion 30 and the heat flow portions 50 that are restrained by the end plates 60 and into which the heating medium flow paths 70A, 70B are inserted through the through holes 54A, 56A. Due to adopting such as configuration, an insulating effect can be obtained below the heat flow portion 50 disposed at the lower side.

As illustrated in Fig. 12A and Fig. 12B, portions of the heating medium flow paths 70 disposed to the exterior of the reaction vessel 22 are provided with a switching member 76 that switches the heating medium flow paths 70 between communication with the heat source 200 and communication with the heat use object 202.

### Chemical Heat Storage System Operation

Explanation follows regarding operation of the chemical heat storage system 10.

In the chemical heat storage system 10, when generating heat (releasing heat) that has been stored in the reactor 20 from the heat storage material layers 32, as illustrated in Fig. 12B the switching member 76 switches the heating medium flow paths 70 to communicate with the heat use object 202. The opening and closing valve 19 is also opened, and in this state water in the liquid phase 16B is evaporated by the heater 18 of the evaporator/condenser 12. The generated water vapor moves in the arrow D direction inside the communication path 14 and is supplied inside the reaction vessel 22.

Next, the supplied water vapor passes through the reaction medium flow section 26 inside the reaction vessel 22 and flows in the plural upper flow paths 48A and lower flow paths 48B of the reaction medium dispersion layer 36, as illustrated in Fig. 10. Water vapor W inside the upper flow paths 48A passes through the upper heat storage material restraining layer 34 and contacts the heat storage material layer 32, whereby the heat storage material molded components 40 of the heat storage material layer 32 generate heat (release heat) as a result of a hydration reaction. This heat is conveyed to the heat use object 202 by the heating medium flowing inside the flow path 52A of the upper heat flow portion 50.

Similarly, water vapor W inside the lower flow paths 48B passes through the lower heat storage material restraining layer 34 and is dispersed into the heat storage material layer 32, whereby the heat storage material molded components 40 of the heat storage material layer 32 generate heat (release heat) as a result of a hydration reaction. This heat is conveyed to the heat use object 202 by the heating medium flowing inside the flow path 52A of the lower heat flow portion 50.

When storing heat in the heat storage material molded components 40 of the heat storage material layers 32 in the chemical heat storage system 10, as illustrated in Fig. 12A the switching member 76 switches the heating medium flow paths 70 to communicate with the heat source 200. The opening and closing valve 19 is also opened, and in this state the heating medium that has been heated by the heat source 200 flows inside the flow paths 52A of the heat flow portions 50 (see Fig. 10).

As illustrated in Fig. 10, the heat of the heating medium flowing inside the flow paths 52A causes a dehydration reaction in the heat storage material molded components 40, thereby storing the heat in the heat storage material molded components 40.

The water vapor W that is released from the heat storage material molded components 40 flows from the heat storage material restraining layers 34 into the plural upper flow paths 48A and the lower flow paths 48B of the reaction medium dispersion layer 36. The water vapor W that has flowed into the upper flow paths 48A and the lower flow paths 48B passes through the reaction medium flow section 26 and flows through the communication path 14 in the arrow E direction to flow inside the evaporator/condenser 12, as illustrated in Fig. 12A.

The water vapor is cooled by the coolant flowing through the coolant flow path 17 in the gas phase 16A of the evaporator/condenser 12. The resultant condensed water is stored in the liquid phase 16B of the vessel 16.

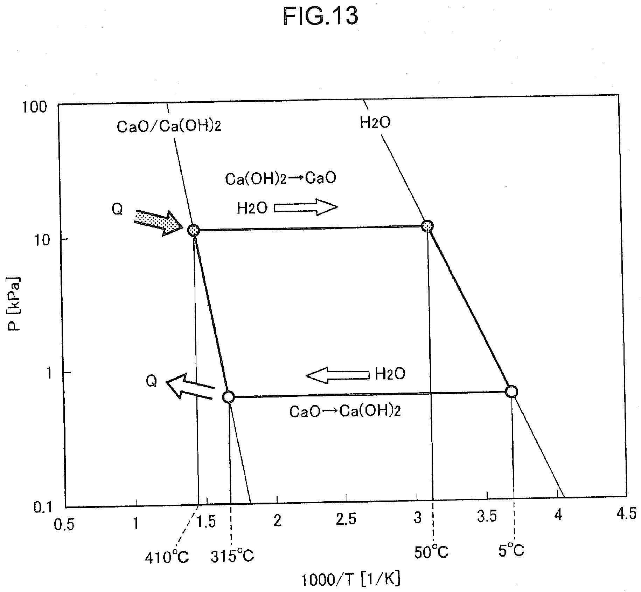

Supplementary explanation follows regarding heat storage and heat release in the heat storage material molded components 40 described above, with reference to an exemplary cycle of the chemical heat storage system 10 that is illustrated in Fig. 13. Fig. 13 illustrates a cycle of the chemical heat storage system 10 represented by pressure equilibrium points represented by a PT graph. In this graph, the upper line of equal pressure represents a dehydration (heat storage) reaction, and the lower line of equal pressure represents a hydration (heat release) reaction.

In this cycle, for example when heat is stored with the heat storage material molded components 40 at a temperature of 410 °C, the water vapor has a temperature equilibrium of 50 °C. Thus in the chemical heat storage system 10, the water vapor is cooled to 50 °C or below by heat exchange with the coolant in the coolant flow path 17 in the evaporator/condenser 12 (see Fig. 12A and Fig. 12B), and condensed to become water.

When the heater 18 performs heating (see Fig. 12A and Fig. 12B), water vapor is generated at a water vapor pressure according to the temperature of the heater 18. For example, it can be seen from the cycle illustrated in Fig. 13 that when water vapor is generated at 5 °C, the heat storage material molded components release heat at 315 °C. Thus, in the chemical heat storage system 10, in which air has been removed from the inside to form a vacuum, a high temperature of 315 °C can be obtained by pumping heat from a low temperature heat source of about 5 °C.

### Reactor Operation

Explanation follows regarding operation of the reactor 20.

As illustrated in Fig. 1 and Fig. 11, the heat storage material reaction portion 30 of the reactor 20 is sealed inside the reaction vessel 22 so as to be surrounded by the reaction medium flow section 26. However, in a conventional configuration a heat storage material reaction portion alone is packed into a small vessel. Namely, in the configuration of the present exemplary embodiment, there is no need to pack the heat storage material reaction portion 30 into the vessel as in the conventional configuration, thereby enabling contact between the heat storage material molded components and a wall of the vessel to be prevented.

Moreover, in the conventional configuration an expansion force of the heat storage material molded components 40, arising due to the hydration reaction, acts on the vessel into which the heat storage material reaction portion has been packed. Therefore, in the conventional configuration damage to the vessel such as cracking could conceivably occur, and the sealing of the vessel may not be secured.

However in the present exemplary embodiment, the heat storage material reaction portion 30 is sealed inside the reaction vessel 22 so as to be surrounded by the reaction medium flow section 26, thereby enabling expansion force of the heat storage material molded components 40 to be prevented from acting directly on the reaction vessel 22.

Since expansion force of the heat storage material molded components 40 is prevented from acting directly on the reaction vessel 22, damage such as cracking of the reaction vessel 22 can also be prevented, thereby ensuring the sealing of the reaction vessel 22.

In particular, in a large sized reactor 20, there is a greater expansion force of the heat storage material molded components 40. However, by adopting the configuration of the present exemplary embodiment the sealing of the reaction vessel 22 can be secured even with a large sized reactor 20. Further, limitations, for example, to the strength of joint portions in the reaction vessel 22 resulting from increasing the capacity and increasing the size (increasing the surface area) of the reactor 20 can be alleviated.

In a conventional configuration in which expansion force of the heat storage material molded components acts directly on the vessel, there is a need for a structure with strong joint portions in order to secure the sealing of the vessel, leading to an unavoidable increase in the mass (weight) of the vessel. However, in the present exemplary embodiment since expansion force of the heat storage material molded components 40 is prevented from acting directly on the reaction vessel 22, the mass of the reaction vessel 22 can be reduced in comparison to that of conventional structures.

Since the weight of the reaction vessel 22 can be reduced, the amount of heat that is lost by the reaction vessel 22 during heat generation can be reduced, thereby preventing a decrease in the temperature of the water vapor flowing in the reaction medium flow section 26.

Since the heat storage material reaction portion 30 is sealed inside the reaction vessel 22 so as to be surrounded by the reaction medium flow section 26, there is no need to secure sealing of the heat storage material reaction portion 30 having a stacked layer structure.

Since there is no need to secure sealing of the heat storage material reaction portion 30 having the stacked layer structure, the heat storage material layers 32, the heat storage material restraining layers 34 and the reaction medium dispersion layer 36 configuring the heat storage material reaction portion 30 can be superimposed (stacked) on each other in a non-joined structure (in a restrained stacked layer structure).

Since the heat storage material layers 32, the heat storage material restraining layers 34 and the reaction medium dispersion layer 36 are configured with a non-joined structure, the respective layers can be easily separated from each other, thereby enabling independent management of the respective layers.

By sealing the heat storage material reaction portion 30 inside the reaction vessel 22 so as to be surrounded by the reaction medium flow section 26, and configuring the heat storage material layers 32, the heat storage material restraining layers 34 and the reaction medium dispersion layer 36 in a non-joined-together structure, the dimensional tolerances of each member can be relaxed in comparison to conventional configurations in which the heat storage material reaction portion is packed into the vessel.

Due to the reaction medium flow section 26 being separated from the outside by the reaction vessel 22, isolation of the water vapor (single composition of reaction medium) can be ensured.

Even though air is removed from the inside of the reaction vessel 22 to configure a reduced pressure reaction system, infiltration of foreign objects into the reaction medium flow section 26 from the exterior of the reaction vessel 22 can be suppressed due to securing the sealing of the reaction vessel 22.

Due to suppressing infiltration of foreign objects from the exterior of the reaction medium flow section 26, only water vapor is present inside the reaction medium flow section 26 (i.e., foreign objects are not present). Therefore, heat loss from the heat storage material reaction portion 30 that is surrounded by the reaction medium flow section 26 can be kept to a minimum. In particular, an exceptionally high heat insulation effect can be obtained in the present exemplary embodiment since very little water vapor is present inside the reaction medium flow section 26 in a reduced pressure reaction system.

Horizontal direction movement of the heat storage material molded components 40 of the heat storage material units 42 is restrained by the outer frame 44A and the partitioning frame 44B, and vertical direction movement of the heat storage material molded components 40 is restrained by the end plates 60 while the heat flow portions 50 and the heat storage material restraining layers 34 being interposed. A six-face restrained state can accordingly be maintained with respect to volume expansion of the heat storage material molded components 40.

The vertical direction dimension of the outer frame 44A of the heat storage material layers 32 is determined such that the density of the heat storage material molded components 40 when expanded reaches the predetermined setting density for the expanded heat storage material molded components 40. The heat storage material layers 32 can accordingly achieve both good reactive properties and durability.

In the reaction medium dispersion layer 36, water vapor is able to flow out from and flow into edge faces of the reaction medium dispersion layer 36 at four directions. Accordingly, even supposing the reactor 20 were to be made larger in size, an increase in length of the water vapor dispersion distance (the length of the water vapor flow path) can be prevented in comparison to a configuration in which water vapor is only able to flow out from and flow into an edge face at one direction.

Due to employing the flow path members 48 that are configured with repeated undulating rectangular wave shaped cross-section profiles in the reaction medium dispersion layer 36, a sufficient opening cross-section area can be secured for the reaction medium dispersion layer 36, and dispersion resistance to the water vapor can also be reduced.

The chemical heat storage system 10 is provided with the reactor 20, thereby preventing expansion force of the heat storage material molded components 40 from acting directly on the reaction vessel 22. The durability of the chemical heat storage system 10 can accordingly be increased.

### Second Exemplary Embodiment

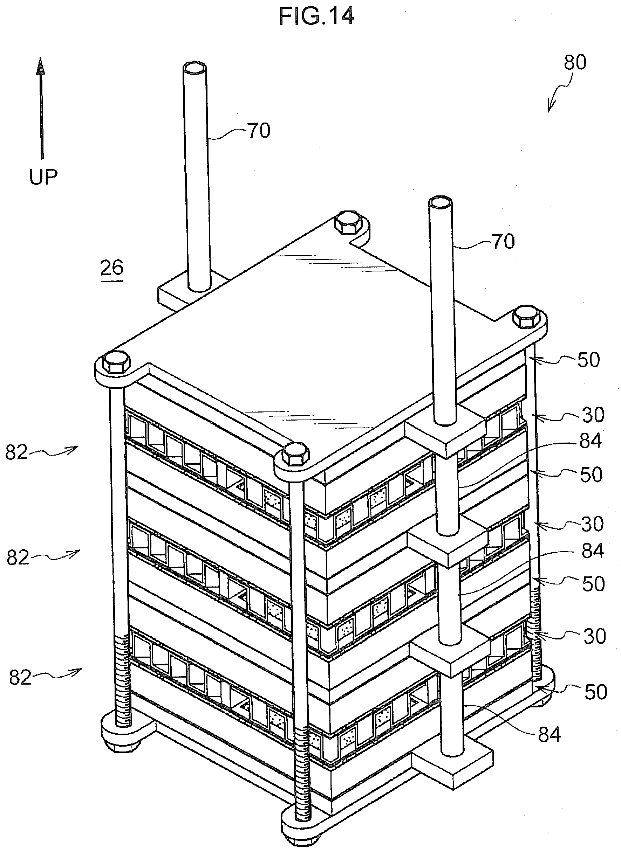

Next, explanation follows regarding a chemical heat storage reactor and a chemical heat storage system according to a second exemplary embodiment of the present invention, with reference to Fig. 14. Note that members that are similar to those of the first exemplary embodiment are allocated the same reference numerals, and explanation thereof is omitted. The explanation is only given regarding portions that differ from the first exemplary embodiment, and explanation regarding other portions is omitted.

As illustrated in Fig. 14, in a reactor 80 of the second exemplary embodiment a reaction unit 82 is configured by a pair of heat flow portions 50 and a heat storage material reaction portion 30, and plural (three in the present exemplary embodiment) reaction units 82 are superimposed on one another inside a vessel (not illustrated in the drawings). Note that the heat flow portions 50 interposed between one of the heat storage material reaction portions 30 and another of the heat storage material reaction portions 30 is a common component between the adjacent reaction units 82.

Coupling flow paths 84 that communicate the heat flow portions 50 with each other are formed by the extending the heating medium flow paths 70. The coupling flow paths 84 are disposed in the reaction medium flow section 26.

The lowermost disposed reaction unit 82 is configured as a module (integrated), and the units superimposed thereon are respectively configured as modules with the bottom end heat flow portion 50 removed from the reaction unit 82. Thereby, the number of reaction units 82 can easily be increased or decreased, such that the heat storage ability can easily be increased or decreased.

By configuring the modules, replacement and repair of faulty parts or the like can be easily performed for each module.

Other configuration and operation are similar to that of the first exemplary embodiment.

### Third Exemplary Embodiment

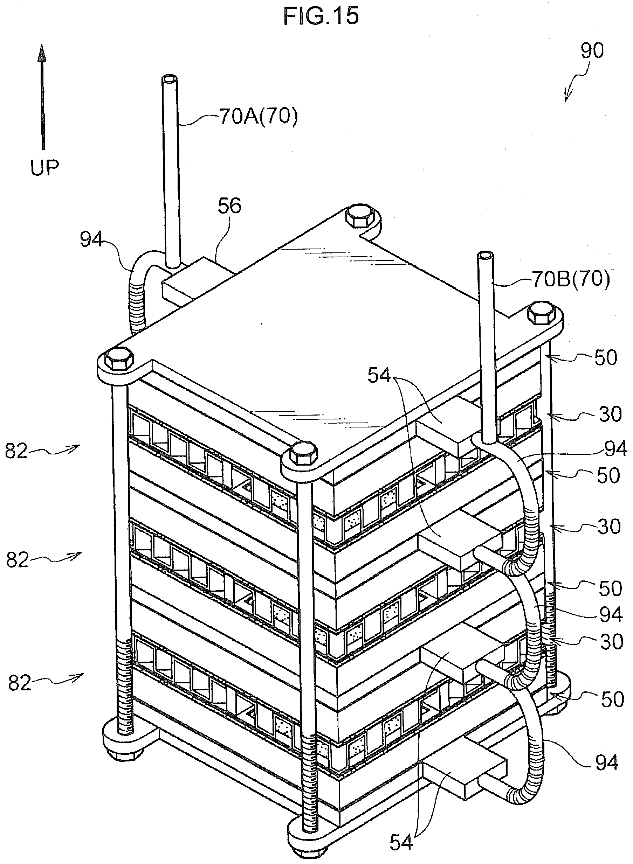

Next, explanation follows regarding a chemical heat storage reactor and a chemical heat storage system according to a third exemplary embodiment of the present invention, with reference to Fig. 15. Note that members similar to those of the second exemplary embodiment are allocated the same reference numerals, and explanation thereof is omitted. The explanation is only given regarding portions that differ from the second exemplary embodiment, and explanation regarding other portions is omitted.

As illustrated in Fig. 15, in a reactor 90 of the third exemplary embodiment, through holes are not formed to the projection portions 54, 56 of the heat flow portions 50. Further, coupling flow paths 94 that communicate the heat flow portions 50 with each other are configured by flexible tubes (tubes that are capable of resilient deformation) that couple between the respective projection portions 54, 56.

The heating medium flow paths 70 are coupled to end portions of the uppermost coupling flow paths 94.

By employing the flexible tubes for the coupling flow paths 94, damage to the coupling flow paths 94 due to expansion of the heat storage material molded components 40 provided in each of the reaction units 82 can be prevented.

Other configuration and operation are similar to that of the second exemplary embodiment.

Although detailed explanation has been given regarding specific exemplary embodiments, the invention is not limited to the particular configuration of the exemplary embodiments, and it would be obvious to a practitioner skilled in the art that various other embodiments are possible within the scope of the present invention. For example in the exemplary embodiments described above the heat flow portions 50 in which the heating medium flows are employed as an example of the heat exchange portion; however, for example an electric heater may be used for supplying heat to the heat storage material molded components 40.

In the exemplary embodiments described above, bolts at the four corners of the pair of end plates 60 are used for restraint; however, embodiments are not limited thereto and a bolt at a central portion of the pair of end plates may also be used for additional restraint. A bolt through a central portion is particularly effective in cases in which the reactor 20 is configured with a larger size.

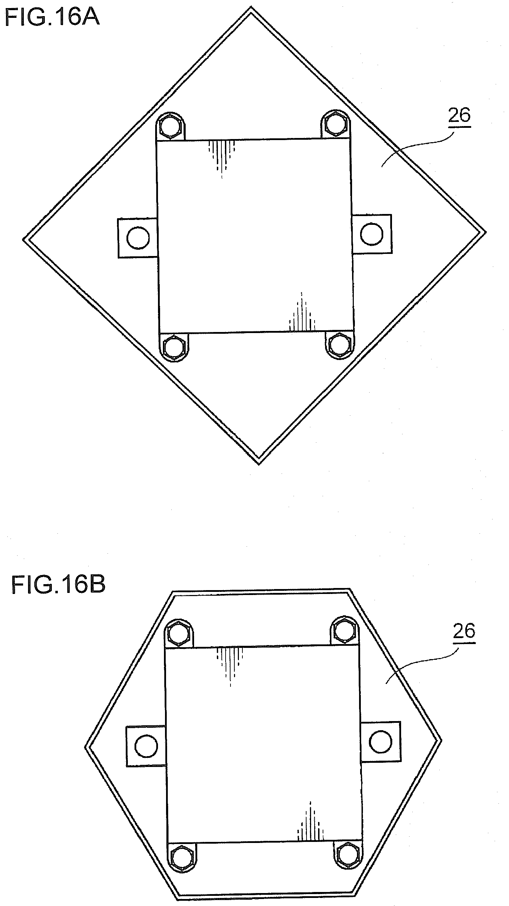

In the exemplary embodiments described above, the reaction vessel 22 is configured in a circular cylinder shape; however, there is no particular limitation to a circular cylinder shape and, for example, the reaction vessel 22 may be configured in polygonal shapes, as illustrated in Fig. 16A and Fig. 16B.

Although not particularly described in the above exemplary embodiments, an ammonia reaction system of alkali metal chlorides, alkali earth metal chlorides, alkali metal bromides, or alkali earth metal bromides may be used as the heat storage material, and ammonia may be used as the reaction medium. In such a configuration, the internal pressure of the vessel will be a pressurized state.

Although not particularly described in the above exemplary embodiments, a high temperature heating medium or an inorganic compound heating medium may be used as the heating medium for operation at high temperatures. Such a configuration enables heating efficiency to be increased.

Although not particularly described in the above exemplary embodiments, a porous absorbent material containing a zeolite, activated carbon, or mesoporous silica may be used for the heat storage material.

In the second exemplary embodiment and the third exemplary embodiment, the reaction units 82 are configured by a pair of the heat flow portions 50 and the heat storage material reaction portion 30; however, each of the reaction units may be configured by one heat flow portion 50, one heat storage material layer 32, one heat storage material restraining layers 34, and one reaction medium dispersion layers 36.

Moreover, although in the exemplary embodiments described above, an inflow side and an outflow side are specified for the heating medium flow paths 70, the inflow side and the outflow side may be varied according to the heat use object coupled thereto.

Although not particularly described in the above exemplary embodiments, through holes may be are formed at walls of the flow path members 48 and the frame member 46 such that the water vapor moves through these through holes.

In the exemplary embodiments described above, the main body 22A and the upper lid 22B, and the main body 22A and the lower lid 22C are joined together by welding; however, joining may be performed using a different method.

In the exemplary embodiments described above, the water vapor is able to flow out from and flow into the edge faces of the reaction medium dispersion layer 36 in four directions; however, edge face(s) at at least one direction may be configured to allow the reaction medium flow, and edge faces at two or more directions may be configured to allow the reaction medium flow. When the edge faces at two or more directions are configured to allow the water vapor flow, an increase in length of the water vapor dispersion distance (the length of the water vapor flow path) can be prevented in comparison to a case in which the reaction medium flows out from, or flows into an edge face at a single direction.

## Claims

1. A chemical heat storage reactor (20, 80, 90) comprising:
a heat storage material reaction portion (30) that comprises a heat storage material molded component (40) that bonds with a reaction medium to generate heat or separates from the reaction medium to store heat;
a pair of heat exchange portions (50) that is provided so as to sandwich the heat storage material reaction portion (30) therebetween from above and below, and that performs heat supply to the heat storage material reaction portion (30), or heat recovery from the heat storage material reaction portion (30), or both;
a pair of end plates (60) provided so as to sandwich the pair of heat exchange portions (50) along the vertical direction; and
a vessel (22) in which the heat storage material reaction portion (30) and the heat exchange portion (50) are sealed, and in which a reaction medium flow section (26) is formed by a space between an inner face of the vessel (22) and a side face of the sealed-in heat storage material reaction portion (30) along a superimpose direction of the heat storage material reaction portion (30) and the heat exchange portion (50), wherein the reaction medium that is supplied to the heat storage material reaction portion or the reaction medium that is discharged from the heat storage material reaction portion flows in the reaction medium flow section (26),
wherein the heat storage material reaction portion (30) further comprises:
a pair of heat storage material layers (32) superimposed on each heat exchange portion (50) and that comprise the heat storage material molded component (40);
a reaction medium dispersion layer (36) that is superimposed with the heat storage material layer (32) at the opposite side of the heat storage material layers (32) from the heat exchange portion (50), that is in communication with the reaction medium flow section (26), and in which flows the reaction medium that is supplied to the heat storage material layers (32) and the reaction medium that is discharged from the heat storage material layers (32); and
a pair of heat storage material restraining layers (34) each being interposed between the heat storage material layer (32) and the reaction medium dispersion layer (36), that restrict movement of the heat storage material configuring the heat storage material layers (32) towards the reaction medium dispersion layer (36) side, and that permit movement of the reaction medium between the reaction medium dispersion layer (36) and the heat storage material layers (32),
wherein the pair of heat storage material layers (32), the pair of heat storage material restraining layers (34) and the reaction medium dispersion layer (36) are superimposed on one another in a non-joined state,
wherein a heating medium that is used to perform heat supply to the heat storage material reaction portion (30) and heat recovery from the heat storage material reaction portion (30) flows in the heat exchange portion (50),
the chemical heat storage reactor further comprises a heating medium path (70) that communicates a heat source and a heat use object disposed at the exterior of the vessel (22) with the heat exchange portion (50), the heating medium path (70) extending from the heat exchange portion (50), passing through the reaction medium flow section (26), and penetrating a wall of the vessel (22) to reach the exterior of the vessel, and
wherein the reaction medium dispersion layer (36) is configured in a rectangular shape as viewed from a layer thickness direction, and the reaction medium in the reaction medium flow section (26) is capable of flowing out from, or flowing into four edge faces of the reaction medium dispersion layer (36).

2. The chemical heat storage reactor of claim 1, further comprising a plurality of reaction units (82), each including the heat exchange portion (50) and the heat storage material reaction portion (30),
wherein the plurality of reaction units (82) are superimposed on one another inside the vessel (22).

3. The chemical heat storage reactor of claim 2, wherein the respective heat exchange portions (50) of the plurality of reaction units (82) communicate with each other through coupling flow paths (84, 94).

4. The chemical heat storage reactor of claim 3, wherein the coupling flow paths (94) are formed by tubes that are capable of resilient deformation.

5. A chemical heat storage system comprising:
the chemical heat storage reactor (20, 80, 90) of any one of claims 1 to 4; and
a medium vessel (12) that is coupled to the vessel (22) of the chemical heat storage reactor, and that performs reaction medium supply into the vessel (22), or receipt of reaction medium from the vessel (22), or both.

## Patentansprüche

1. Chemischer Wärmespeicherreaktor (20, 80, 90), umfassend:
einen Wärmespeichermaterialreaktionsabschnitt (30), der eine aus Wärmespeichermaterial geformte Komponente (40) umfasst, welche sich mit einem Reaktionsmedium verbindet, um Wärme zu erzeugen, oder sich von dem Reaktionsmedium trennt, um Wärme zu speichern;
ein Paar von Wärmeaustauschabschnitten (50), das derart vorgesehen ist, um den Wärmespeichermaterialreaktionsabschnitt (30) dort dazwischen von oben und unten einzubetten, und welches eine Wärmezufuhr zu dem Wärmespeichermaterialreaktionsabschnitt (30) oder eine Wärmerückgewinnung von dem Wärmespeichermaterialreaktionsabschnitt (30) oder beides, ausführt;
ein Paar von Endplatten (60), das derart vorgesehen ist, um das Paar von Wärmeaustauschabschnitten (50) entlang der vertikalen Richtung einzubetten; und
einen Behälter (22), in dem der Wärmespeichermaterialreaktionsabschnitt (30) und der Wärmeaustauschabschnitt (50) dicht verschlossen sind, und in welchem ein Reaktionsmediumströmungsabschnitt (26) durch einen Raum zwischen einer Innenfläche des Behälters (22) und einer Seitenfläche des abgedichteten Wärmespeicherreaktionsabschnitts (30) entlang einer Überlagerungsrichtung des Wärmespeichermaterialreaktionsabschnitts (30) und des Wärmeaustauschabschnitts (50) gebildet ist, wobei das Reaktionsmedium, welches dem Wärmespeichermaterialreaktionsabschnitt zugeführt wird, oder das Reaktionsmedium, welches von dem Wärmespeichermaterialreaktionsabschnitt ausgetragen wird, in den Reaktionsmediumströmungsabschnitt (26) strömt,
wobei der Wärmespeichermaterialreaktionsabschnitt (30) ferner umfasst:
ein Paar von Wärmespeichermaterialschichten (32), die auf jedem Wärmeaustauschabschnitt (50) überlagert sind, und welche die aus Wärmespeichermaterial geformte Komponente (40) umfassen;
eine Reaktionsmediumdispersionsschicht (36), welche mit der Wärmespeichermaterialschicht (32) an der gegenüberliegenden Seite der Wärmespeichermaterialschichten (32) von dem Wärmeaustauschabschnitt (50) überlagert ist, welche mit dem Reaktionsmediumströmungsabschnitt (26) in Verbindung ist, und in dem das Reaktionsmedium, welches den Wärmespeichermaterialschichten (32) zugeführt wird, und das Reaktionsmedium, welches von den Wärmespeichermaterialschichten (32) ausgetragen wird, strömen; und
ein Paar von Wärmespeichermaterialbeschränkungsschichten (34), wobei jede zwischen der Wärmespeichermaterialschicht (32) und der Reaktionsmediumdispersionsschicht (36) angeordnet ist, welche eine Bewegung des Wärmespeichermaterials, welches die Wärmespeichermaterialschichten (32) bildet, in Richtung der Seite der Reaktionsmediumdispersionsschicht (36) begrenzen, und welche eine Bewegung des Reaktionsmediums zwischen der Reaktionsmediumdispersionsschicht (36) und den Wärmespeichermaterialschichten (32) erlauben,
wobei das Paar von Wärmespeichermaterialschichten (32), das Paar von Wärmespeichermaterialbegrenzungsschichten (34) und die Reaktionsmediumdispersionsschicht (36) aufeinander in einem nicht-verbundenen Zustand überlagert sind,
wobei ein Wärmemedium, welches verwendet wird, um eine Wärmezufuhr zu dem Wärmespeichermaterialreaktionsabschnitt (30) und eine Wärmerückgewinnung von dem Wärmespeichermaterialreaktionsabschnitt (30) durchzuführen, in dem Wärmeaustauschabschnitt (50) strömt,
der chemische Wärmespeicherreaktor ferner einen Wärmemediumweg (70) umfasst, der eine Wärmequelle und ein Wärmeverwendungsobjekt, das im Außenbereich des Behälters (22) angeordnet ist, mit dem Wärmeaustauschabschnitt (50) verbindet, und sich der Wärmemediumweg (70) von dem Wärmeaustauschabschnitt (50) erstreckt, durch den Reaktionsmediumströmungsabschnitt (26) verläuft, und eine Wand des Behälters (22) durchdringt, um den Außenbereich des Behälters zu erreichen, und
wobei die Reaktionsmediumdispersionsschicht (36) von einer Schichtdickenrichtung aus gesehen in einer rechteckigen Form ausgebildet ist, und das Reaktionsmedium in dem Reaktionsmediumströmungsabschnitt (26) in der Lage ist, aus der oder in die vier Randflächen der Reaktionsmediumdispersionsschicht (36) zu strömen.

2. Chemischer Wärmespeicherreaktor nach Anspruch 1, ferner umfassend eine Mehrzahl von Reaktionseinheiten (82), wovon jede den Wärmeaustauschabschnitt (50) und den Wärmespeichermaterialreaktionsabschnitt (30) enthält,
wobei die Mehrzahl von Reaktionseinheiten (82) aufeinander innerhalb des Behälters (22) überlagert sind.

3. Chemischer Wärmespeicherreaktor nach Anspruch 2, wobei die jeweiligen Wärmeaustauschabschnitte (50) der Mehrzahl von Reaktionseinheiten (82) jeweils durch Kupplungsströmungswege (84, 94) miteinander in Verbindung sind.

4. Chemischer Wärmespeicherreaktor nach Anspruch 3, wobei die Kupplungsströmungswege (94) durch Rohre gebildet sind, die zur elastischen Verformung in der Lage sind.

5. Chemisches Wärmespeichersystem, umfassend:
den chemischen Wärmespeicherreaktor (20, 80, 90) nach einem der Ansprüche 1 bis 4;
und einen Mediumbehälter (12), der mit dem Behälter (22) des chemischen Wärmespeicherreaktors gekoppelt ist, und welcher eine Reaktionsmediumzufuhr in den Behälter (22) oder eine Aufnahme von Reaktionsmedium von dem Behälter (22) oder beides, durchführt.

## Revendications

1. Réacteur de stockage de chaleur chimique (20, 80, 90) comprenant :
une partie de réaction de matériau de stockage de chaleur (30) qui comprend un composant moulé de matériau de stockage de chaleur (40) qui se lie à un milieu réactionnel pour générer de la chaleur ou se sépare du milieu réactionnel pour stocker de la chaleur;
une paire de parties d'échange de chaleur (50) qui est prévue de manière à prendre en sandwich la partie de réaction de matériau de stockage de chaleur (30) entre elles par-dessus et par-dessous, et qui effectue un apport de chaleur à la partie de réaction de matériau de stockage de chaleur (30), ou une récupération de chaleur de la partie de réaction de matériau de stockage de chaleur (30), ou les deux ;
une paire de plaques d'extrémités (60) prévues de manière à prendre en sandwich la paire de parties d'échange de chaleur (50) le long de la direction verticale ; et
un récipient (22) dans lequel la partie de réaction de matériau de stockage de chaleur (30) et la partie d'échange de chaleur (50) sont scellées, et dans lequel une section d'écoulement de milieu réactionnel (26) est formée par un espace entre une face intérieure du récipient (22) et une face latérale de la partie de réaction de matériau de stockage de chaleur scellée (30) le long d'une direction de superposition de la partie de réaction de matériau de stockage de chaleur (30) et de la partie d'échange de chaleur (50), où le milieu réactionnel qui est fourni à la partie de réaction de matériau de stockage de chaleur ou le milieu réactionnel qui est déchargé de la partie de réaction de matériau de stockage de chaleur s'écoule dans la section d'écoulement de milieu réactionnel (26),
dans lequel la partie de réaction de matériau de stockage de chaleur (30) comprend en outre :
une paire de couches de matériau de stockage de chaleur (32) superposées sur chaque partie d'échange de chaleur (50) et qui comprennent le composant moulé en matériau de stockage de chaleur (40) ;
une couche de dispersion de milieu réactionnel (36) qui est superposée à la couche de matériau de stockage de chaleur (32) sur le côté opposé des couches de matériau de stockage de chaleur (32) de la partie d'échange de chaleur (50), qui est en communication avec la section d'écoulement de milieu réactionnel (26), et dans laquelle s'écoule le milieu réactionnel qui est fourni aux couches de matériau de stockage de chaleur (32) et le milieu réactionnel qui est évacué des couches de matériau de stockage de chaleur (32) ; et
une paire de couches retenant le matériau de stockage de chaleur (34), chacune étant interposée entre la couche de matériau de stockage de chaleur (32) et la couche de dispersion de milieu réactionnel (36), qui limite un déplacement du matériau de stockage de chaleur configurant aux couches de matériau de stockage de chaleur (32) vers le côté de la couche de dispersion de milieu réactionnel (36), et permettant un déplacement du milieu réactionnel entre la couche de dispersion de milieu réactionnel (36) et les couches de matériau de stockage de chaleur (32),
dans lequel la paire de couches de matériau de stockage de chaleur (32), la paire de couches retenant le matériau de stockage de chaleur (34) et la couche de dispersion de milieu réactionnel (36) sont superposées les unes sur les autres dans un état non jointif,
dans lequel un milieu chauffant qui est utilisé pour fournir un apport de chaleur à la partie de réaction de matériau de stockage de chaleur (30) et une récupération de chaleur à partir de la partie de réaction de matériau de stockage de chaleur (30) s'écoule dans la partie d'échange de chaleur (50),
le réacteur de stockage de chaleur chimique comprend en outre un trajet de milieu chauffant (70) qui font communiquer une source de chaleur et un objet d'utilisation de chaleur disposé à l'extérieur du récipient (22) avec la partie d'échange de chaleur (50), le trajet de milieu chauffant (70) s'étendant de la partie d'échange de chaleur (50), traversant la section de d'écoulement de milieu réactionnel (26), et pénétrant une paroi du récipient (22) pour atteindre l'extérieur du récipient, et
dans lequel la couche de dispersion de milieu réactionnel (36) est configurée sous une forme rectangulaire telle que vue depuis une direction de l'épaisseur de couche, et le milieu réactionnel dans la section d'écoulement de milieu réactionnel (26) est capable de s'écouler à l'extérieur depuis, ou de s'écouler dans quatre faces de bord de la couche de dispersion de milieu réactionnel (36).

2. Réacteur de stockage de chaleur chimique selon la revendication 1, comprenant en outre une pluralité d'unités de réaction (82), chacune comprenant la partie d'échange de chaleur (50) et la partie de réaction de matériau de stockage de chaleur (30),
dans lequel la pluralité d'unités de réaction (82) se superposent les unes sur les autres à l'intérieur du récipient (22).

3. Réacteur de stockage de chaleur chimique selon la revendication 2, dans lequel les parties d'échange de chaleur (50) respectives de la pluralité d'unités de réaction (82) communiquent les unes avec les autres par des trajets d'écoulement de couplage (84, 94).

4. Réacteur de stockage de chaleur chimique selon la revendication 3, dans lequel les trajets d'écoulement de couplage (94) sont formés par des tubes capables de se déformer de manière élastique.

5. Système de stockage de chaleur chimique comprenant :
le réacteur de stockage de chaleur chimique (20, 80, 90) selon l'une quelconque des revendications 1 à 4 ; et
un récipient moyen (12) qui est couplé au récipient (22) du réacteur de stockage de chaleur chimique, et qui effectue une alimentation du milieu réactionnel dans le récipient (22), ou la réception du milieu réactionnel du récipient (22), ou les deux.
